# EUROPÄISCHE PATENTSCHRIFT

(11) **EP 2 962 020 B1**
(45) Veröffentlichungstag und Bekanntmachung des Hinweises auf die Patenterteilung: **12.07.2017**
(21) Anmeldenummer: 13774623.6
(22) Anmeldetag: 23.09.2013
(51) Int. Cl.: F16K 31/60, F16K 11/078, F16K 27/04

(54) **EINHANDHEBELKARTUSCHE**
SINGLE HAND LEVER CARTRIDGE
CARTOUCHE DE MITIGEUR

(30) Priorität: 01.03.2013 EP 13157471
(43) Veröffentlichungstag der Anmeldung: 06.01.2016
(73) Patentinhaber: Flühs Drehtechnik GmbH, D-58515 Lüdenscheid (DE)
(72) Erfinder: LANGE, Lutz, 58511 Lüdenscheid (DE)
(74) Vertreter: Patentanwälte Dörner & Kötter PartG mbB
(86) Internationale Anmeldenummer: PCT/EP2013/069745
(87) Internationale Veröffentlichungsnummer: WO 2014/131471

(56) Entgegenhaltungen:
- EP-A1- 0 110 339
- DE-T2- 69 315 681
- US-A- 5 887 852

## Beschreibung

Die Erfindung betrifft eine Armatur mit einer einen Ventilsitz aufweisenden Kartuschenaufnahme, in die eine Einhandhebelkartusche eingebracht ist, nach dem Oberbegriff des Patentanspruchs 1.

In Sanitärarmaturen werden häufig als Mischerkartuschen ausgeführte Einhandhebelkartuschen eingesetzt in denen eine eine Steuerscheibe sowie eine Durchlassscheibe aufweisende Scheibensteuerung angeordnet ist, welche über einen einzigen Hebel derart bedienbar ist, dass sowohl die Wassermenge als auch die Wassertemperatur über ein und denselben Hebel steuerbar ist. Derartige austauschbare Kartuschen, wie sie beispielsweise in der US 2011/0308652 A1 oder der DE 693 15 681 T2 beschrieben sind, können in unterschiedlich gestalteten Armaturengehäusen eingesetzt werden.

Bei der Gestaltung von Armaturengehäusen besteht zunehmend der Wunsch, nach einem möglichst kleinen Aufbau. Daher ist es erforderlich, die Mischerkartuschen klein und kompakt aufzubauen, wobei gleichzeitig die Anforderung nach einer großen Wassermenge gegeben ist. Mischerkartuschen sind regelmäßig aus Kunststoffspritzgußteilen zusammengesetzt, wobei aufgrund der kleinen Dimensionierung der Bauteile, verbunden mit großzügig dimensionierten Durchlassöffnungen für den Wasserdurchtritt bereichsweise nur geringe Materialstärken vorhanden sind. Die Mischerkartuschen werden in dem Armaturengehäuse gegen einen Ventilsitz verspannt, um die erforderliche Dichtigkeit zu gewährleisten. Die Verspannung erfolgt regelmäßig über einen Befestigungsring, der an seinen dem Ventilsitz gegenüberliegenden Ende des Kopfstücks der Mischerkartusche angeordnet und in das Armaturengehäuse eingeschraubt wird, wodurch die Vorspannung erzielt wird.

Nachteilig an den vorbekannten Mischerkartuschen ist, dass bedingt durch die Vorspannung Verformungen des regelmäßig aus Kunststoff hergestellten Bodenstücks der Mischerkartusche auftreten können, wodurch die Dichtheit zwischen Mischerkartusche und Ventilsitz beeinträchtigt sein kann.

Hier will die Erfindung Abhilfe schaffen. Der Erfindung liegt die Aufgabe zu Grunde, eine Armatur mit einer einen Ventilsitz aufweisenden Kartuschenaufnahme, in die eine Einhandhebelkartusche eingebracht ist bereitzustellen, bei der eine Verformung des Bodenstücks im eingespannten Zustand vermieden ist. Gemäß der Erfindung wird diese Aufgabe dadurch gelöst, dass der das Bodenstück aufnehmende endseitige Abschnitt des Kopfstücks derart ausgebildet ist, dass er mit der der Steuerscheibe abgewandten Bodenfläche des Bodenstücks zumindest bereichsweise zumindest bündig ist.

Mit der Erfindung ist eine Einhandhebelmischerkartusche geschaffen, bei der eine Verformung des Bodenstücks im eingespannten Zustand der Mischerkartusche vermieden ist. Durch die Gestaltung des Kopfstücks derart, dass der das Bodenstück aufnehmende endseitige Abschnitt mit der der Steuerscheibe abgewandten Bodenfläche des Bodenstücks zumindest bereichsweise zumindest bündig ist bzw. diese vorzugsweise zumindest bereichsweise überragt, ist bewirkt, dass dieser endseitige Abschnitt auf dem Ventilsitz aufliegt. Die Spannkräfte werden so durch das Kopfstück direkt auf den Ventilsitz übertragen, wodurch Setzeffekte des aus Kunststoff ausgebildeten Bodenstücks vermieden sind. Zur gleichmäßigen Übertragung der Spannkräfte auf den Ventilsitz einer Armatur überragt der endseitige Abschnitt die Bodenfläche des Bodenstücks besonders bevorzugt vollständig, wobei Aussparungen, in die Befestigungsabsätze des Bodenstücks zu dessen drehfesten Fixierung eingreifen, zu vernachlässigen sind. Wesentlich ist, dass das Bodenstück an keiner Stelle den endseitigen Abschnitt des Kopfstücks überragt.

In Weiterbildung der Erfindung nimmt das Bodenstück wenigstens eine Dichtung zur Abdichtung gegenüber einem Ventilsitz einer Armatur auf, welche den endseitigen Abschnitt des Kopfstücks überragt. Hierdurch ist eine definierte Verformbarkeit der Dichtung erzielt, wodurch eine zuverlässige Dichtwirkung gewährleistet ist. Eine Beschädigung der Dichtung durch übermässige Verspannung ist so vermieden.

In weiterer Ausgestaltung der Erfindung ist die Mantelfläche des Bodenstücks bereichsweise durch einen Abschnitt einer Dichtung gebildet. Hierdurch ist eine geringe Bauteildimensionierung des Bodenstücks erzielt.

In Weiterbildung der Erfindung ist das Bodenstück derart ausgebildet, dass der Mittelpunkt des Bodenstücks auf der Ebene dessen Bodenfläche liegt und nicht durch eine Dichtung gebildet ist. Hierdurch ist eine Beeinträchtigung der Dichtung bzw. der Dichtungsauflage durch Fertigungstoleranzen des Ventilsitzes vermieden, welche beispielsweise durch die Zentrierspitze des Bohrers im Zuge der Herstellung verursacht sind.

In weiterer Ausgestaltung der Erfindung ist das Ventiloberteil als Seitenauslaufventil ausgebildet. Bei der Gestaltung von Armaturen wird oftmals auch ein seitlicher Wasserauslauf gefordert. Ein solcher seitlicher Wasseraustritt wird dadurch realisiert, dass der Boden der Mischerkartusche derart ausgebildet ist, dass das austretende Wasser zwischen dem Bodenstück der Kartusche und dem Boden der Aufnahme der Armatur austreten und durch einen seitlichen Auslauf der Armatur geführt werden kann.

Andere Weiterbildungen und Ausgestaltungen der Erfindung sind in den übrigen Unteransprüchen angegeben. Ausführungsbeispiele der Erfindung sind in den

Zeichnungen dargestellt und werden nachfolgend im Einzelnen beschrieben. Es zeigen:

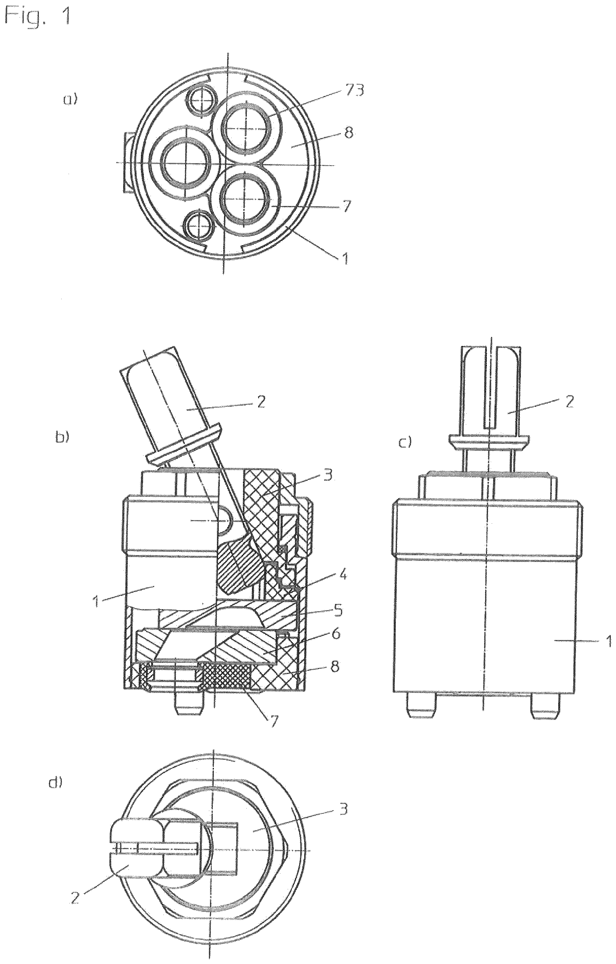

- Figur 1: die schematische Darstellung einer Einhandhebelmischerkartusche
a) in der Ansicht von unten;
b) im Teillängsschnitt;
c) in der Seitenansicht;
d) in der Draufsicht;

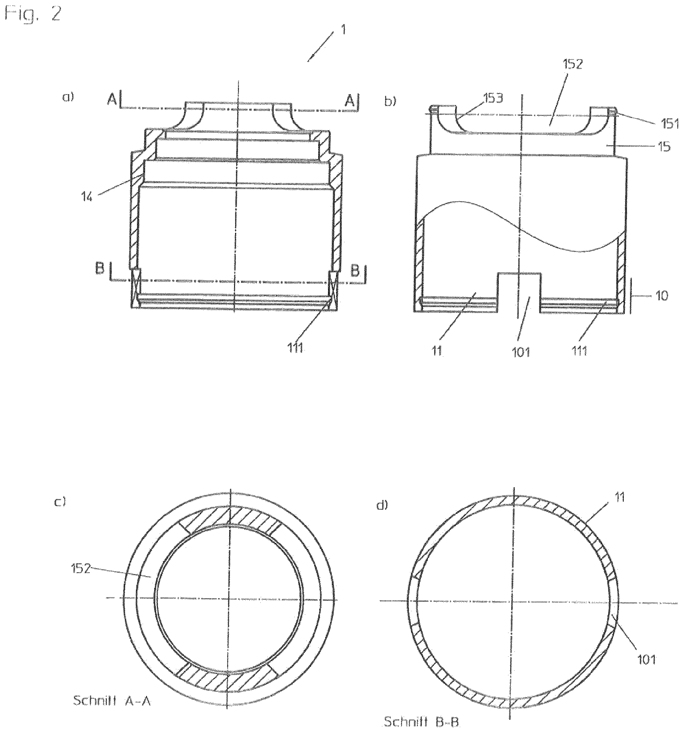

- Figur 2: die schematische Darstellung des Kopfstücks der Mischerkartusche aus Figur 1
a) im Längsschnitt;
b) im Teilschnitt in um 90° gedrehter Seitenansicht
c) im Querschnitt (Schnitt A-A);
d) im Querschnitt (Schnitt B-B);

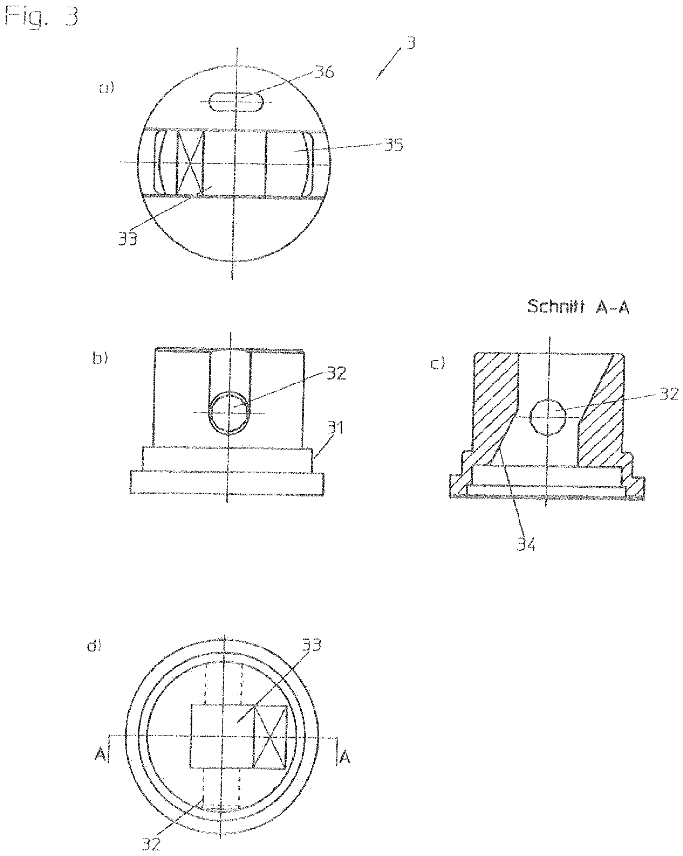

- Figur 3: die schematische Darstellung der Spindelaufnahme der Mischerkartusche aus Figur 1
a) in der Draufsicht;
b) in der Seitenansicht;
c) im Längsschnitt (Schnitt A-A);
d) in der Ansicht von unten;

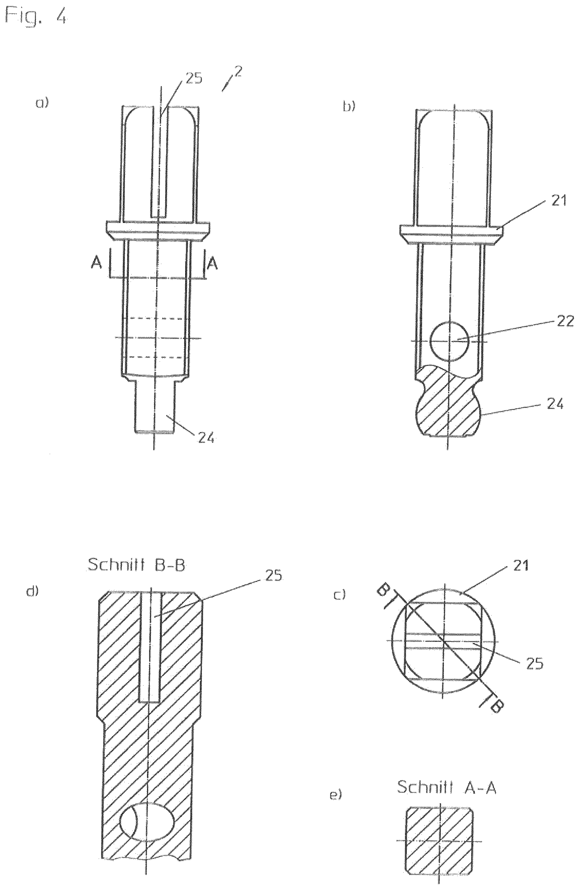

- Figur 4: die Spindel der Mischerkartusche aus Figur 1
a) in der Seitenansicht;
b) im Teilschnitt in um 90° gedrehter Seitenansicht
c) in der Draufsicht;
d) im Längsschnitt (Schnitt B-B);
e) im Querschnitt (Schnitt A-A);

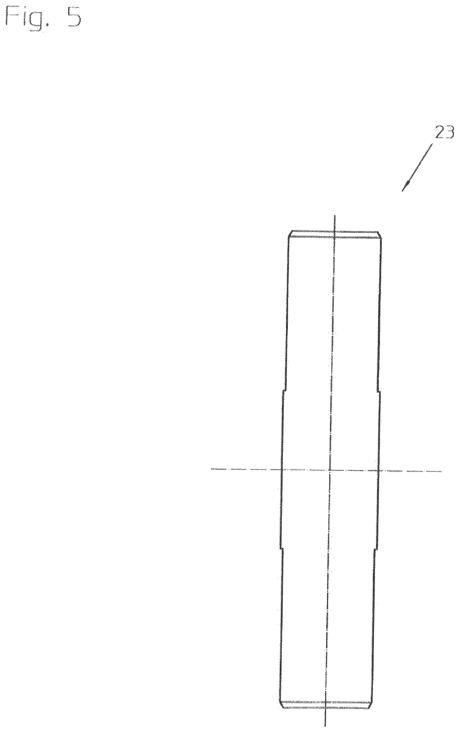

- Figur 5: die Schwenkachse der Spindel der Mischerkartusche aus Figur 1;

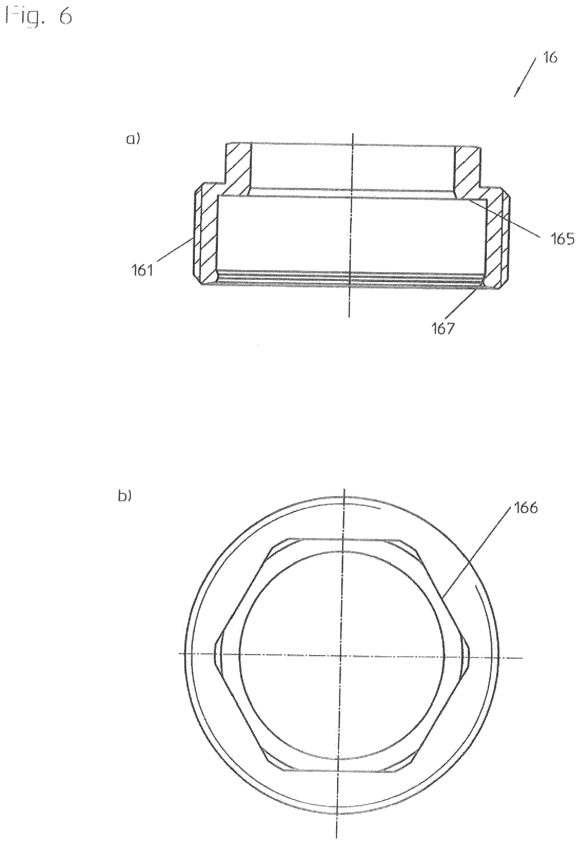

- Figur 6: den Befestigungsring der Mischerkartusche aus Figur 1
a) im Längsschnitt;
b) in der Draufsicht;

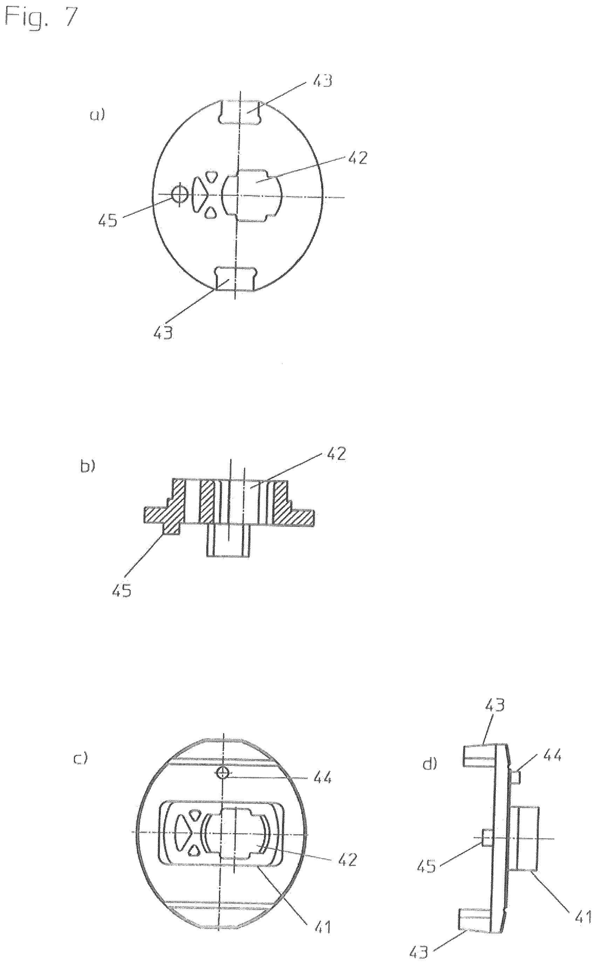

- Figur 7: die schematische Darstellung des Gleitstücks der Mischerkartusche aus Figur 1
a) in der Ansicht von unten ;
b) im Querschnitt ;
c) in der Draufsicht;
d) in der Seitenansicht;

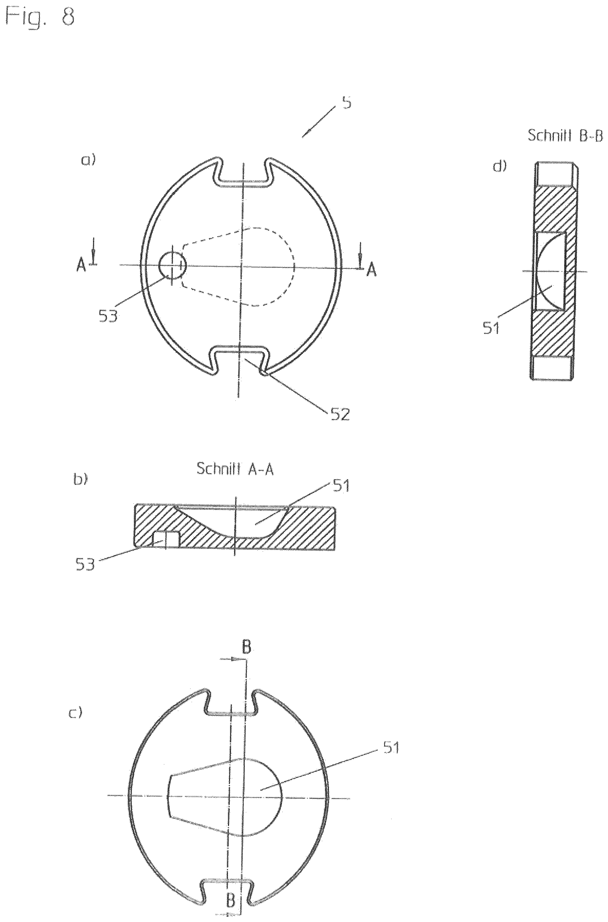

- Figur 8: die Darstellung der Steuerscheibe der Mischerkartusche aus Figur 1
a) in der Ansicht von unten;
b) im Querschnitt (Schnitt A-A);
c) in der Draufsicht;
d) im Querschnitt (Schnitt B-B);

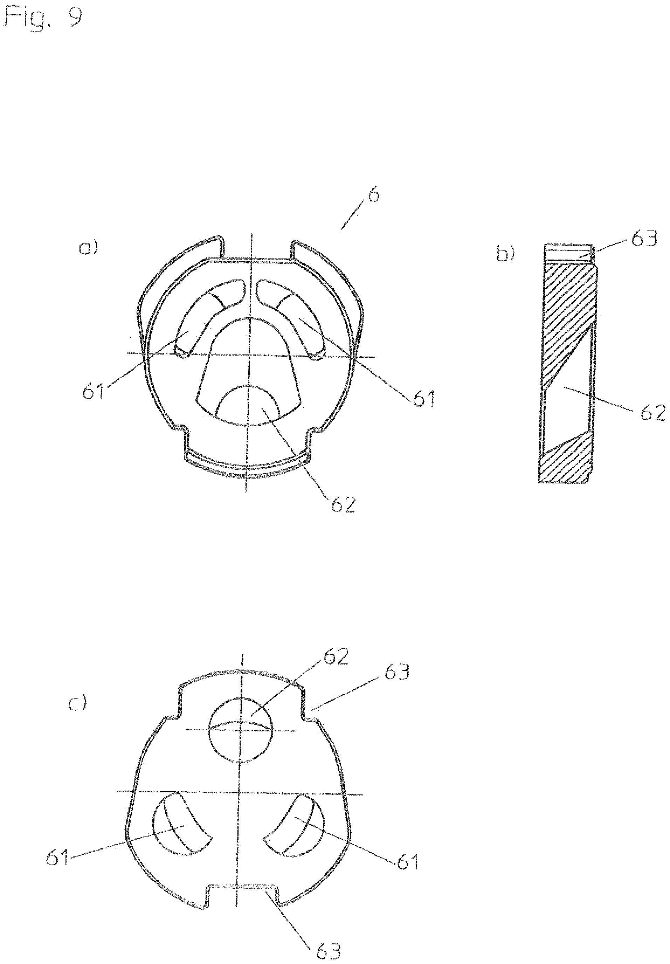

- Figur 9: die Darstellung der Durchlassscheibe der Mischerkartusche aus Figur 1
a) in der Ansicht von unten;
b) im Querschnitt;
c) in der Draufsicht;

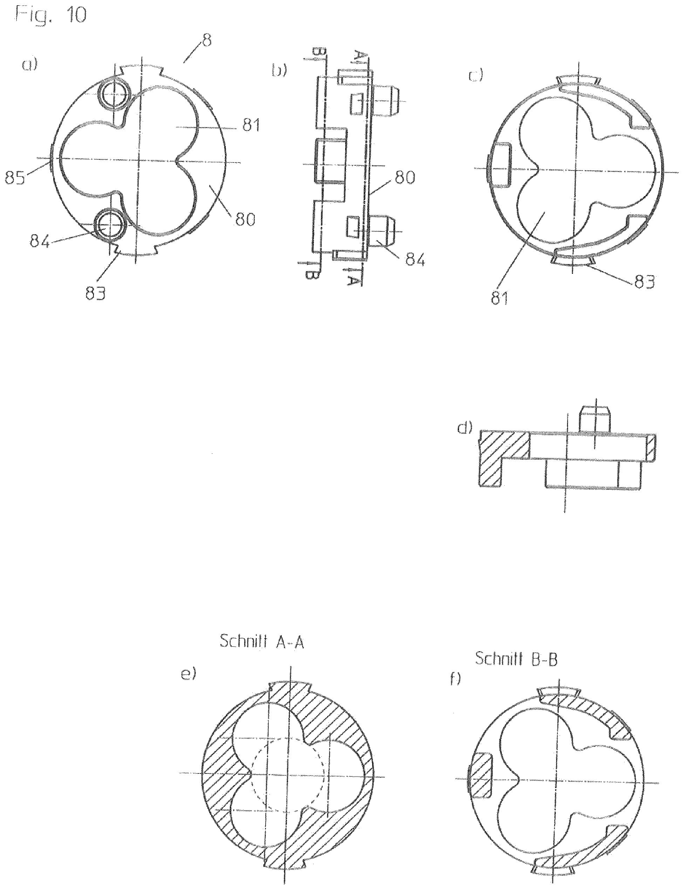

- Figur 10: die Darstellung des Bodenstücks des Mischerkartusche aus Figur 1
a) in der Ansicht von unten;
b) in der Seitenansicht;
c) in der Draufsicht;
d) im Teilschnitt;
e) im Querschnitt (Schnitt A-A);
f) im Querschnitt (Schnitt B-B);

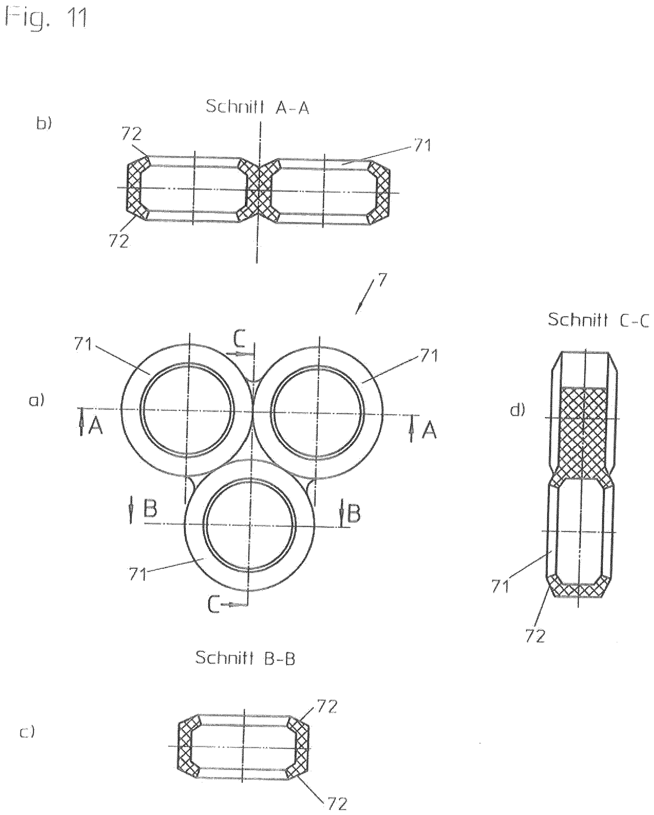

- Figur 11: die Darstellung des Lippendichtungformteils der Mischerkartusche aus Figur 1
a) in der Draufsicht;
b) im Längsschnitt (Schnitt A-A);
c) im Längsschnitt (Schnitt B-B);
d) im Längsschnitt (Schnitt C-C);
- Figur 12: die schematische Darstellung einer Einhandhebelmischerkartusche in einer weiteren Ausführungsform für eine Armatur mit seitlichem Auslauf
a) in der Ansicht von unten;
b) im Längsschnitt;
c) in der Seitenansicht;
d) in der Draufsicht;

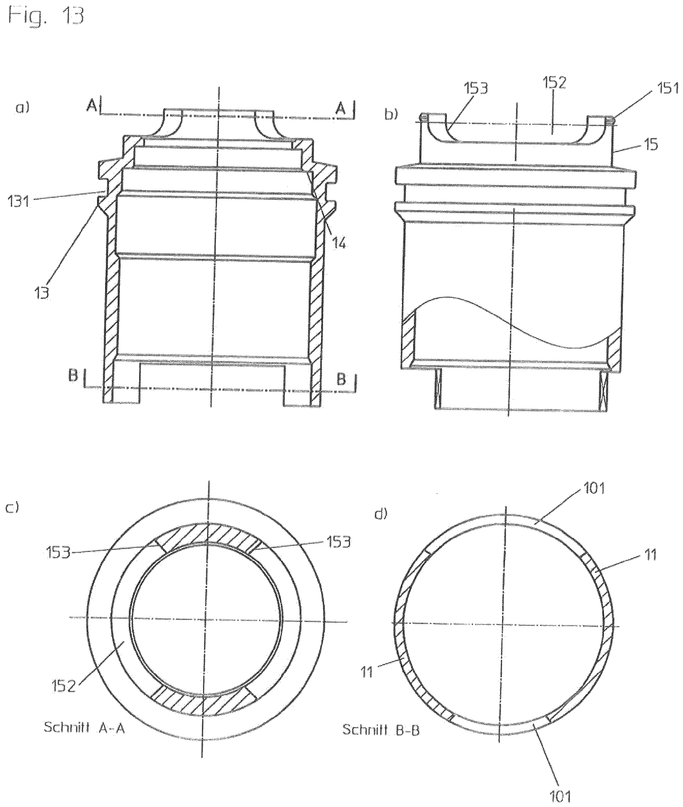

- Figur 13: die schematische Darstellung des Kopfstücks der Mischerkartusche aus Figur 12
a) im Längsschnitt;
b) im Teilschnitt in um 90° gedrehter Seitenansicht
c) im Querschnitt (Schnitt A-A);
d) im Querschnitt (Schnitt B-B);

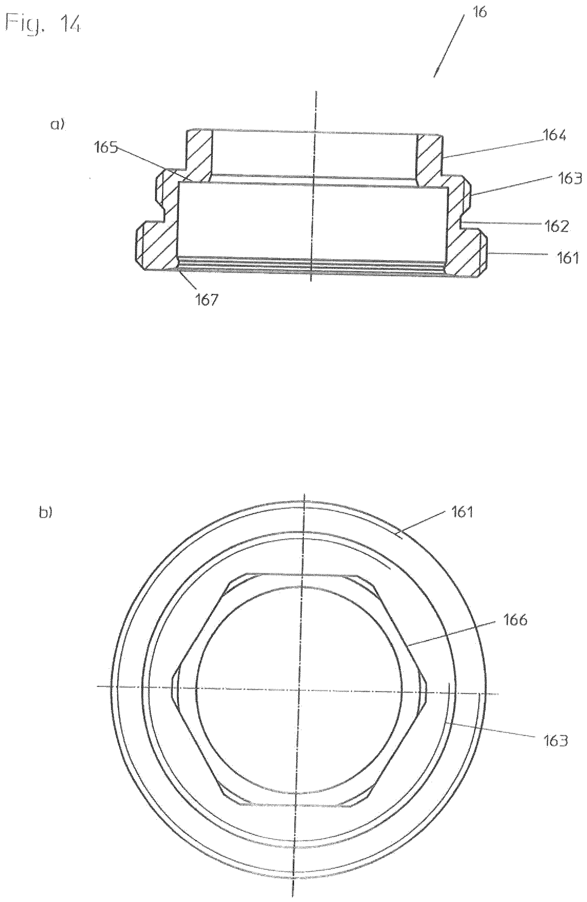

- Figur 14: den Befestigungsring der Mischerkartusche aus Figur 12
a) im Längsschnitt;
b) in der Draufsicht;

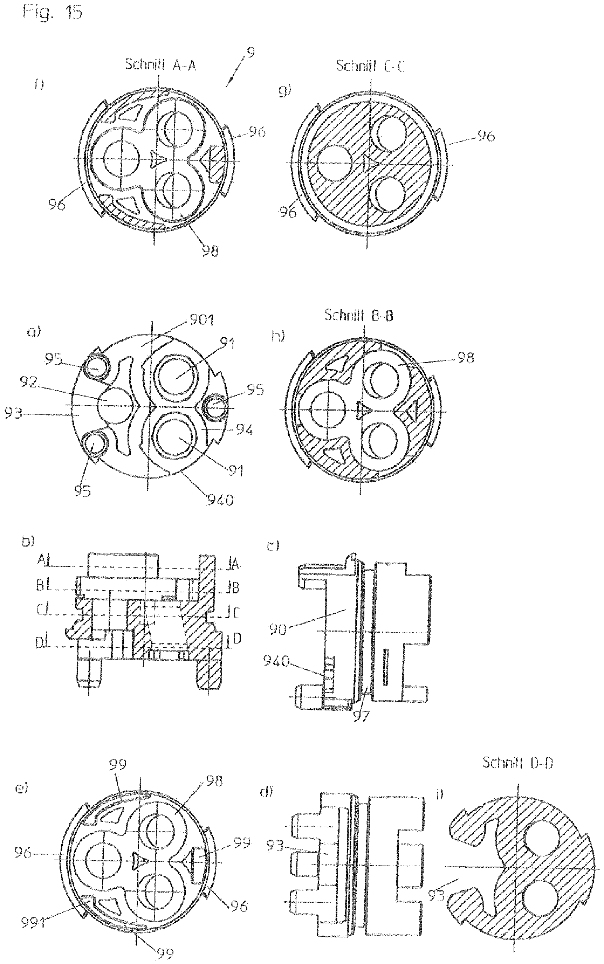

- Figur 15: die Darstellung des Bodenstückes des Mischerkartusche aus Figur 12
a) in der Ansicht von unten;
b) in Teilschnittdarstellung;
c) in der Seitenansicht;
d) in der um 90° verdrehten Seitenansicht;
e) in der Draufsicht;
f) im Querschnitt (Schnitt A-A);
g) im Querschnitt (Schnitt B-B);
h) im Querschnitt (Schnitt C-C);
i) im Querschnitt (Schnitt D-D);

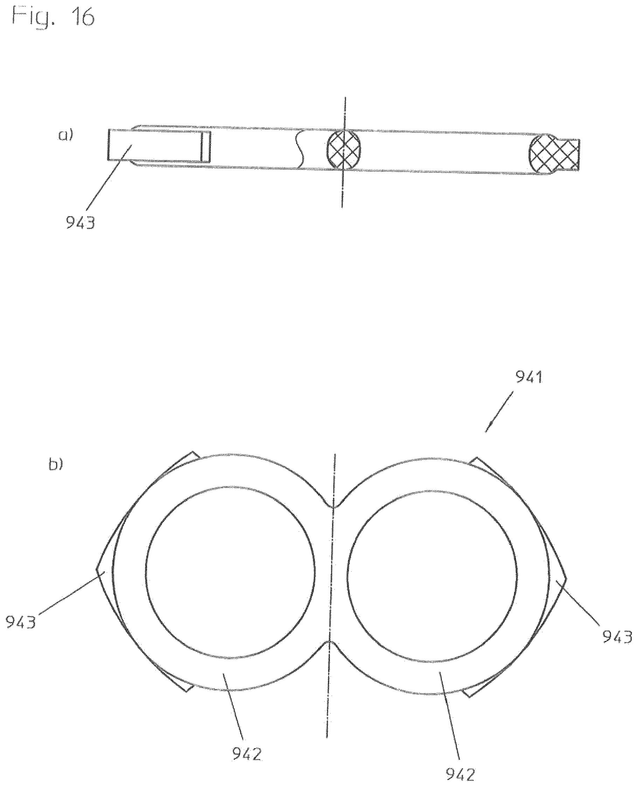

- Figur 16: die Darstellung des Lippendichtungformteils der Mischerkartusche aus Figur 12
a) in der Seitenansicht im Teilschnitt;
b) in der Draufsicht.
- Figur 17: die Darstellung der in einer Armatur angebrachten Mischerkartusche aus Figur 1
a) im Längsschnitt
b) in Detaildarstellung des Ausschnitts "X"

Die als Ausführungsbeispiel gewählte Einhandhebelmischerkartusche besteht im Wesentlichen aus einem Kopfstück 1, in das eine Spindel 2 axial hineinragt, die in einer drehbar gelagerten Spindelaufnahme 3 schwenkbar gelagert ist und die in ein Gleitstück 4 eingreift, das mit einer Steuerscheibe 5 verbunden ist, die mit einer Durchlassscheibe 6 korrespondiert, an die sich ein Bodenstück 8 anschließt, welches ein Dichtungsformteil 7 aufnimmt.

Das Kopfstück 1 ist hülsenartig ausgebildet und im Ausführungsbeispiel als Messingdrehteil hergestellt. An seinen dem Bodenstück 8 zugewandten endseitigen Abschnitt 10 sind in das Kopfstück 1 diametral zueinander zwei rechteckförmige Ausnehmungen 101 eingebracht, durch die zwei bogenförmige Stege 11 gebildet sind, an deren Innenseite eine Rastnut 111 eingebracht ist. An seinen den Stegen 11 gegenüberliegenden Ende weist das Kopfstück 1 einen durchmesserreduzierten Abschnitt 15 auf, an dem endseitig umlaufend eine Nase 151 angeformt ist. In den durchmesserreduzierten Abschnitt 15 sind diametral zueinander zwei Ausnehmungen 152 eingebracht, durch die jeweils zwei radiale Anschläge 153 gebildet sind. Die Anschläge 153 dienen der Drehbegrenzung der Spindelaufnahme 3. Unterhalb des durchmesserreduzierten Abschnitts 15 ist an dem Kopfstück 1 innen ein Absatz 14 ausgebildet.

Auf den durchmesserreduzierten Abschnitt 15 des Kopfstücks 1 ist weiterhin ein Befestigungsring 16 aufgestülpt. Der Befestigungsring 16 weist außen umlaufend ein Außengewinde 161 zum Einschrauben in eine Armatur 1001 auf. Oberhalb des Außengewindes 161 ist der Befestigungsring 16 mit einem Außensechskant 166 versehen. Unterhalb des Außensechskants 166 ist in dem Befestigungsring 16 innen ein Absatz 165 gebildet. An seinen dem Außensechskant 166 entgegengesetzten Ende ist innen in dem Befestigungsring weiterhin umlaufend eine Nase 167 angeformt.

Die Spindel 2 ist im Ausführungsbeispiel im Wesentlichen quaderförmig ausgebildet. Etwa mittig ist an der Spindel 2 eine kreisringförmige koaxiale Anformung 21 zur Aufnahme eines - nicht dargestellten - Bedienteils angeformt. Oberhalb der Anformung 21 ist in die Spindel 2 ein bis zu der Anformung 21 geführter Schlitz 25 eingebracht. Unterhalb der Anformung 21 ist durch die Spindel 2 eine Bohrung 22 zur Aufnahme eines Achsstiftes 23 eingebracht. Endseitig ist an die Spindel 2 ein in Form einer Kugelscheibe ausgebildeter Steuerkopf 24 angeformt, der an seiner dem Gleitstück 4 zugewandten Seite abgeflacht ausgebildet ist.

Die Spindelaufnahme 3 ist als im Wesentlichen zylinderförmiges Kunststoffspritzgußteil ausgebildet. An seinem dem Gleitstück 4 zugewandten Ende ist an der Spindelaufnahme 3 ein zweistufiger Absatz 31 angeformt, dessen Kontur der Innenkontur des zweistufigen Absatzes 14 des Kopfstücks 1 entspricht, an der dieser anliegt. Oberhalb des zweitstufigen Absatzes 31 ist durch die Spindelaufnahme 3 eine radiale Durchgangsbohrung 32 zur Aufnahme des Achsstiftes 23 für die Spindel 2 eingebracht. Axial ist durch die Spindelaufnahme 3 eine Durchführung 33 für die Spindel 2 angeformt, welche seitliche Anschläge 34 aufweist, durch die der Schwenkradius der Spindel 2 um den Achsstift 23 begrenzt ist. Die Durchführung 33 mündet in einer im Wesentlichen quaderförmig ausgebildeten Aufnahme 35 für das Gleitstück 4. Beabstandet zu der Aufnahme 35 ist in der Spindelaufnahme 3 eine im Wesentlichen ovale Einbuchtung 36 zur Aufnahme des Führungsstiftes 44 des Gleitstücks 4 eingebracht.

Das als Kunststoffspritzgußteil ausgeführte Gleitstück 4 ist im Wesentlichen in Form einer Kreisscheibe ausgebildet, auf der ein im Wesentlichen quaderförmiges Formstück 41 angeformt ist. Das Formstück 41 ist derart ausgebildet, dass es innerhalb der Aufnahme 35 der Spindelaufnahme 3 in Längsrichtung verschiebbar und in Querrichtung geführt ist. Axial ist durch das Gleitstück 4 das Formstück 41 durchdringend ein Langloch 42 zur Aufnahme des Steuerkopfes 24 der Spindel 2 eingebracht. Seitlich des Formstücks 41 ist ein Führungsstift 44 zum Eingriff in die Einbuchtung 36 der Spindelaufnahme 3 angeformt. An seiner dem Formstück 41 entgegen gerichteten Unterseite sind an dem Gleitstück 4 außen gegenüberliegend zwei axiale Stege 43 zur Aufnahme der Steuerscheibe 5 angeformt. Weiterhin ist an der Unterseite ein Paßstift 45 zum Eingriff in die Paßbohrung 53 der Steuerscheibe 5 angeformt, wodurch eine lagegerechte Orientierung der Steuerscheibe 5 bei der Montage gewährleistet ist.

Die Steuerscheibe 5 ist oval ausgebildet und als Keramikteil hergestellt. An ihrer der Durchlassscheibe 6 zugewandten Seite weist die Steuerscheibe eine mittig angeordnete, eiförmige Einbuchtung 51 auf. Auf ihrer der Einbuchtung 51 entgegen gesetzten Oberseite sind in der Steuerscheibe 5 diametral zueinander außen zwei Ausnehmungen 52 zur Aufnahme der Stege 23 des Gleitstücks 4 eingebracht. Weiterhin ist in der Steuerscheibe 5 an ihrer dem Gleitstück 4 zugewandten Seite eine Passbohrung 53 eingebracht. Über die Ausnehmungen 52 sowie die Paßbohrung 53 ist die Steuerscheibe 5 mit dem Gleitstück 4 formschlüssig verbunden.

Die Durchlassscheibe 6 ist ebenfalls als Keramikteil ausgeführt. Durch die Durchlassscheibe 6 sind zwei Einlasskanäle 61 für kaltes bzw. warmes Wasser sowie ein relativ zu diesen vergrößert ausgebildeter Auslasskanal 62 für das Mischwasser eingebracht. Die Einlasskanäle 61 sowie der Auslasskanal 62 sind schräg zur Durchlassscheibe 6 durch diese hindurch geführt. Seitlich sind an der Durchlassscheibe 6 versetzt zueinander drei Aussparungen 63 zur formschlüssigen Verbindung mit dem Bodenstück 8 eingebracht.

Das Dichtungsformteil 7 ist im Ausführungsbeispiel aus Gummi hergestellt. Es ist im Wesentlichen durch drei Ringe 71 gebildet, die jeweils an den beiden übrigen Ringen 71 angeformt sind, sodass eine kleeblattartige Kontur gebildet ist. An den Ringen 71 des Dichtungsformteils 7 sind an deren Oberseite sowie an deren Unterseite jeweils Dichtlippen 72 angeformt. Zur Formstabilisierung sind die Ringe 71 jeweils mit einem Stützring 73 versehen, welche zwischen den Dichtlippen 72 der Ringe 71 angeordnet ist.

Das Bodenstück 8 ist Wesentlichen zylinderförmig ausgebildet. Mittig ist in dem Bodenstück 8 eine kleeblattförmige Aufnahme für das Dichtungsformteil 7 eingebracht. Umlaufend der Aufnahme 81 sind beabstandet zueinander drei Stege 82 zur drehfesten Aufnahme der Durchlassscheibe 6 angeformt. Die Stege 82 greifen in die Aussparungen 63 der Durchlassscheibe 6 ein. Zur Verbesserung des Formschlusses sind an zwei Stegen 82 Nasen 821 abgeformt, welche in hierzu korrespondierende Aussparungen 63 der Durchlassscheibe 6 eingreifen. Seitlich sind an dem Bodenstück 8 diametral zueinander zwei Absätze 83 zum Eingriff in die Ausnehmungen 101 des endseitigen Abschnitts 10 des Kopfstücks 1 angeformt. An seiner den Stegen 82 gegenüberliegenden Unterseite sind an dem Bodenstück 8 weiterhin zwei axiale Positionierstifte 84 angeformt. Die Positionierstifte 84 dienen der Positionierung der Einhandhebelmischerkartusche in einer - nicht dargestellten - Armatur, welche hierzu mit entsprechenden Positionierbohrungen versehen ist. Umlaufend sind an dem Bodenstück 8 Rastnasen 85 angeformt, welche eine Rastverbindung zwischen dem Bodenstück 8 und dem Kopfstück 1 ermöglichen. Die Rastnasen greifen in die Rastnut 111 der bogenförmigen Stege 11 des Kopfstücks 1 ein.

Im montierten Zustand greifen die Absätze 83 des Bodenstücks 8 in die Ausnehmungen 101 des Kopfstücks 1 ein. Dabei überragen die bogenförmigen Stege 11 des endseitigen Abschnitts 10 des Kopfstücks 1 die Bodenfläche 80 des Bodenstücks 8 um 0,3 Millimeter. Aus der Bodenfläche 80 ragen die beiden Positionierstifte 84 zur Positionierung einer - nicht dargestellten - Armatur hervor.

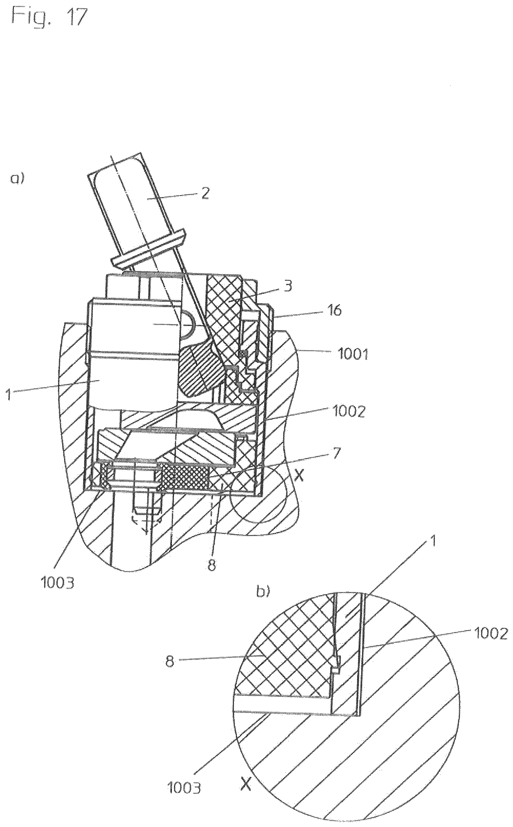

Die Mischerkartusche wird - wie in Figur 17 dargestellt - über dem Befestigungsring 16 mit der Armatur 1001 verbunden und gegen den Ventilsitz 1003 der Kartuschenaufnahme 1002 der Armatur vorgespannt. Die hierdurch erzielten Vorspannkräfte werden durch das Kopfstück über den endseitigen Abschnitt 10, der über die Bodenfläche 80 des Bodenstücks 8 hervorragt, auf den Ventilsitz 1003 übertragen.

Der Befestigungsring 16 ist auf den durchmesserreduzierten Abschnitt 15 des Kopfstücks 1 übergestülpt, wobei die umlaufende Nase 151 bei Passieren der umlaufenden Nase 167 des Befestigungsrings 16 elastisch nach innen gezwängt wird. Nach Passieren der Nase 167 des Befestigungsrings 116 nimmt die Nase 151 des durchmesserreduzierten Abschnitts 15 des Kopfstücks 1 ihre ursprüngliche Position wieder ein. Der Befestigungsring 16 ist somit verliersicher an dem Kopfstück 1 gehalten. Das Einschrauben des Befestigungsrings 16 in die Armatur 1001 erfolgt über den Außensechskant 166.

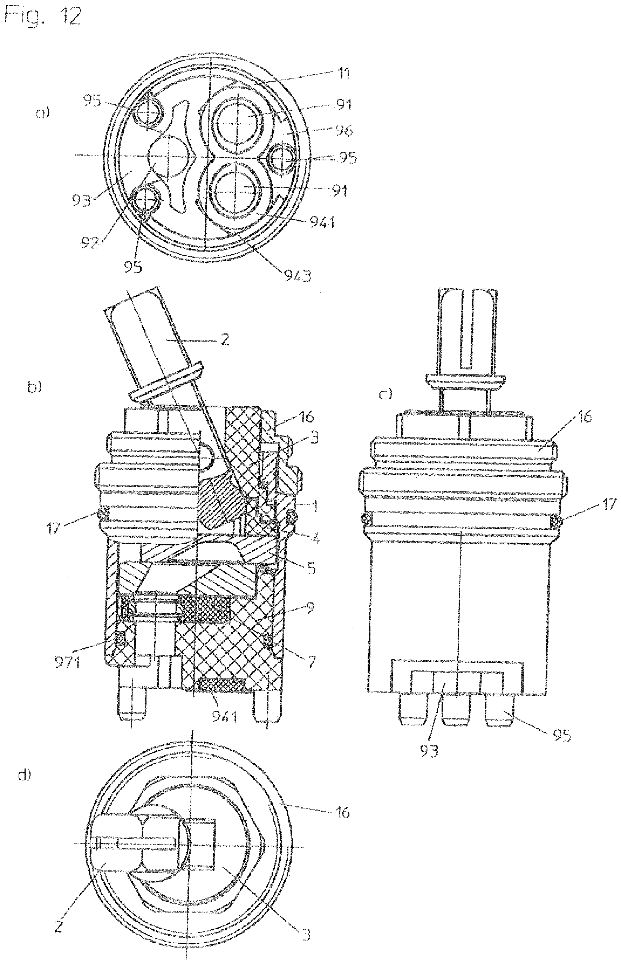

Im Ausführungsbeispiel gemäß Figur 12 ist die Einhandhebelmischerkartusche für Armaturen mit seitlichem Wasserauslauf ausgebildet. Dabei ist an dem Kopfstück 1 ein umlaufender, durchmesservergrößerter Absatz 13 angeordnet, in den mittig umlaufend eine Nut 131 zur Aufnahme eines O-Rings 17 eingebracht ist. Oberhalb des Absatzes 14 ist ein durchmesserreduzierter Abschnitt 15 angeordnet, an dem endseitig umlaufend eine Nase 151 angeformt ist. In dem durchmesserreduzierten Abschnitt 15 sind ebenfalls diametral zueinander zwei Ausnehmungen 152 eingebracht, durch die jeweils zwei radiale Anschläge 153 gebildet sind, welche der Drehbegrenzung der Spindelaufnahme 3 dienen. An seinem endseitigen Abschnitt 10 sind in dem Kopfstück 1 gegenüberliegend zwei Ausnehmungen 101 eingebracht, durch die bogenförmige Stege 11 gebildet sind. Die Ausnehmungen 101 sind rechteckförmig mit unterschiedlicher Breite, jedoch identischer Höhe ausgebildet.

Auf den durchmesserreduzierten Abschnitt 15 des Kopfstücks 1 ist ein Befestigungsring 16 aufgestülpt, der außen umlaufend ein erstes Außengewinde 161 zum Einschrauben eine - nicht dargestellte - Armatur aufweist. Oberhalb des ersten Außengewindes 131 ist ein durchmesserreduzierter Absatz 62 angeordnet, der mit einem zweiten Außengewinde 163 versehen ist. Endseitig ist an dem Befestigungsring 16 ein durchmesserreduzierter Abschnitt 164 angeformt, durch den ein Absatz 165 gebildet ist. Außen ist der durchmesserreduzierte Abschnitt 164 ebenfalls mit einem Außensechskant 166 versehen. An seinen dem durchmesserreduzierten Abschnitt 164 entgegen gesetzten Ende ist innen in dem Befestigungsring weiterhin ebenfalls umlaufend eine Nase 167 angeformt.

Das Bodenstück 9 ist im Wesentlichen zylinderförmig ausgebildet. In dem Bodenstück 9 sind zwei Einlassbohrungen 91 sowie eine Auslassbohrung 92 eingebracht, deren Mittelachsen ein gleichschenkliges Dreieck begrenzen. Die Auslassbohrung 92 mündet in einer Ausbuchtung 93, welche sich über den Außenmantel 90 des Bodenstücks 9 erstreckt. Die Ausbuchtung 93 ermöglicht einen ausreichenden Wasserzufluss für einen seitlichen Auslasskanal einer - nicht dargestellten - Armatur. Die beiden Einlassbohrungen 91 sind von einer brillenförmigen Nut 94 umrandet, welche der Aufnahme eines Dichtungsformteils 941 dient. Die Nut 94 ist derart positioniert, dass die diese umgebene Begrenzungskante durch den Mittelpunkt der Bodenfläche 901 des Bodenstücks 9 verläuft. Die Ausbuchtung 93 flankierend sowie dieser gegenüberliegend sind an dem Bodenstück 9 drei axiale Positionierstifte angeformt.

Das Dichtungsformteil 941 ist im Ausführungsbeispiel aus Gummi hergestellt. Es ist im Wesentlichen durch zwei Ringe 942 gebildet, welche aneinander angeformt sind, sodass eine brillenförmige Kontur gebildet ist. Außen sind an dem Dichtungsformteil Paßlippen 943 angeformt, welche in den seitlichen Ausbrüchen 940 der Nut 94 anliegen. Die Außenkontur der Paßlippen 943 ist derart ausgebildet, dass sie sich in die Kontur des Außenmantels 90 des Bodenstücks 9 einfügt.

Seitlich sind an dem Bodenstück 9 gegenüberliegend zwei Absätze 96 angeformt, die mit den Ausnehmungen 101 des Kopfstücks 1 korrespondieren und in diese eingreifen. Oberhalb der Absätze 96 ist umlaufend eine Nut 97 zur Aufnahme eines O-Rings 971 zur Abdichtung des Bodenstücks 8 gegenüber dem Kopfstück 1 eingebracht. Auf seiner der Nut 94 gegenüberliegenden Oberseite weist das Bodenstück 9 eine kleeblattartige Aufnahme 98 für das Dichtungsformteil 7 auf. Umlaufend der Aufnahme 98 sind gleichmäßig beabstandet zueinander drei Stege 99 zur drehfesten Aufnahme der Durchlassscheibe 6 angeformt. Die Stege 99 greifen wiederum in die Aussparungen 63 der Durchlassscheibe 6 ein. Zur Verbesserung des Formschlusses sind an zwei Stegen wiederum Nasen 991 angeformt, welche in hierzu korrespondierende Aussparungen 63 der Durchlassscheibe 6 eingreifen.

Die so ausgestalte Einhandhebelmischerkartusche wird in eine - nicht dargestellte - Armatur mit einer Kartuschenaufnahme eingebracht, an deren offenen Ende ein Innengewinde zum Einschrauben des Befestigungsrings 16 des Kopfstücks 1 eingebracht ist. In die Kartuschenaufnahme dieser - nicht dargestellten - Armatur münden bodenseitig in einem Ventilsitz zwei Wasserzulaufanschlüsse, die über das Dichtungsformteil 941 gegenüber den Einlassbohrungen 91 abgedichtet sind und die umgebend eine ebene Anschlagfläche zur Auflage des endseitigen Abschnitts 10 des Kopfstücks 1 angeordnet ist. Das Kopfstück 1 ist über den in der - nicht dargestellten - Armatur eingeschraubten Befestigung 16 gegen die Anschlagfläche des Ventilsitzes verspannt, wobei die Spannkräfte direkt über das Kopfstück 1 auf die Anschlagfläche übertagen werden. Weiterhin ist ein seitlicher Wasserablaufanschluss angeordnet. Das Mischwasser gelangt durch die Auslassbohrung 92 über die Ausbuchtung 93 in den Raum der Kartuschenaufnahme und über diesen in den seitlichen Wasserablaufanschluss.

Durch die erfindungsgemäße Gestaltung des Bodenstücks, welches durch die bogenförmige Stege 11 des endseitigen Abschnitts 10 des Kopfstücks 1 überragt ist, ist ein sehr kompakter Aufbau dieser für den Seitenauslauf konzipierten Einhandhebelmischerkartusche ermöglicht. Durch die beiden Ausbrüche 940 der Nut 94, in welche die Paßlippen 943 des Dichtungsformteils 941 eingreifen, ist eine sehr raumsparende Gestaltung des Bodenstücks 9 erzielt. Eine durchgehende Nut zur Aufnahme des Dichtungsformteils 941 ist vorliegend nicht erforderlich, da im Bereich der Ausbrüche 940 die Nutbegrenzung durch die bodenförmigen Stege 11 des Kopfstücks 1 gebildet ist.

## Patentansprüche

1. Armatur mit einer einen Ventilsitz aufweisenden Kartuschenaufnahme, in die eine Einhandhebelkartusche eingebracht ist, die ein hülsenartig ausgebildetes Kopfstück (1) umfasst, das ein Bodenstück (8, 9) aufnimmt, sowie eine Scheibensteuerung mit einer Steuerscheibe (5), welche über eine drehbar und/ oder schwenkbar gelagerte Spindel (2) relativ zu einer mit dieser korrespondierenden Durchlassscheibe (6) drehbar und/ oder verschiebbar angeordnet ist, an welche Durchlassscheibe (6) sich das Bodenstück (8, 9) anschließt, wobei das Kopfstück (1) über einen Befestigungsring (16) der das Kopfstück (1) außen umgreift, gegen den Ventilsitz verspannt ist, **dadurch gekennzeichnet, dass** der das Bodenstück (8, 9) aufnehmende endseitige Abschnitt (10) des Kopfstücks (1) derart ausgebildet ist, dass er die der Steuerscheibe (5) abgewandte Bodenfläche (80, 901) des Bodenstücks (8, 9) zumindest bereichsweise überragt und das Bodenstück (8,9) diesen Abschnitt (10) an keiner Stelle überragt, wobei der Ventilsitz eine ebene Anschlagfläche aufweist, auf dem der endseitige Abschnitt des Kopfstücks aufliegt, derart, dass die vertikal wirkenden Spannkräfte direkt über das Kopfstück (1) auf die Anschlagfläche übertragen werden.

2. Armatur nach Anspruch 1, **dadurch gekennzeichnet, dass** das Bodenstück (8) wenigstens eine Dichtung zur Abdichtung gegenüber einem Ventilsitz einer Armatur aufnimmt, welche den endseitigen Abschnitt (10) des Kopfstücks (1) überragt.

3. Armatur nach Anspruch 2, **dadurch gekennzeichnet, dass** die Mantelfläche (90) des Bodenstücks (9) bereichsweise durch einen Abschnitt einer Dichtung (941) gebildet ist.

4. Armatur nach einem der vorgenannten Ansprüche, **dadurch gekennzeichnet, dass** die Dichtung durch ein Dichtungsformteil (7, 941) gebildet ist, das wenigstens zwei kreisförmige Durchlässe aufweist.

5. Armatur nach einem der Ansprüche 2 bis 4, **dadurch gekennzeichnet, dass** das Bodenstück (8, 9) derart ausgebildet ist, dass der Mittelpunkt des Bodenstücks (8, 9) auf der Ebene dessen Bodenfläche (80. 901) liegt und nicht durch eine Dichtung gebildet ist.

6. Armatur nach einem der vorgenannten Ansprüche, **dadurch gekennzeichnet, dass** die Mischerkartusche als Seitenauslaufventil ausgebildet ist.

7. Armatur nach einem der vorgenannten Ansprüche, **dadurch gekennzeichnet, dass** das Kopfstück 1 als Messingdrehteil ausgebildet ist.

## Claims

1. Valve assembly having a cartridge holder incorporating a valve seat into which is fitted a single hand lever cartridge that comprises a top member (1) designed in the form of a sleeve to receive a bottom member (8, 9) and a disk control means having a control disk (5) that is arranged so that it can be rotated and/or displaced relative to a through-flow disk (6) matching the control disk (5) by means of a rotatably and/or pivotably mounted spindle (2) to which through-flow disk (6) the bottom member (8, 9) is connected, wherein the top member (1) is clamped against the valve seat by means of a fastening ring (16) that fits around the top member (1) on the outside, **characterised in that** that the end portion (10) of the top member (1) that receives the bottom member (8, 9) is designed so as to at least partly stand out above that bottom surface (80, 901) of the bottom member (8, 9) that faces away from the control disk (5) and the bottom member (8, 9) does not stand out above this portion (10) at any point, wherein the valve seat incorporates a level stop surface on which the end portion of the top member rests so that the vertically acting clamping forces are transmitted to the stop surface direct by the top member.

2. Valve assembly in accordance with claim 1, **characterised in that** the bottom member (8) receives one or more seals for sealing against a valve seat of a valve assembly that stands or stand out above the end portion (10) of the top member (1).

3. Valve assembly in accordance with claim 2, **characterised in that** the lateral surface (90) of the bottom member (9) is partly formed by a portion of a seal (941).

4. Valve assembly in accordance with any one of the foregoing claims, **characterised in that** the seal is formed by a shaped sealing component (7, 941) that incorporates two or more circular through-flow holes.

5. Valve assembly in accordance with any one of claims 2 to 4, **characterised in that** the bottom member (8, 9) is designed so that the mid-point of the bottom member (8, 9) lies in the plane of the bottom surface (80, 901) of the bottom member (8, 9) and is not formed by a seal.

6. Valve assembly in accordance with any one of the foregoing claims, **characterised in that** the mixer cartridge is designed as a side-outlet valve.

7. Valve assembly in accordance with any one of the foregoing claims, **characterised in that** the top member (1) is designed as a brass turned part.

## Revendications

1. Robinetterie comprenant un logement de mitigeur qui présente un siège de vanne, logement dans lequel est montée une cartouche de mitigeur monocommande englobant une pièce têtière (1) configurée en forme de douille qui reçoit une pièce de fond (8, 9), ainsi qu'une commande par disque avec disque de commande (5) disposé de façon à pouvoir tourner et/ou se déplacer, via une broche (2) en appui rotatif et/ou pivotant, relativement à un disque de passage (6) qui épouse ledit disque de commande, disque de passage (6) contre lequel la pièce fond (8, 9) vient se raccorder, sachant que la pièce têtière (1) est serrée contre le siège de vanne via une bague de fixation (16) qui ceinture l'extérieur de la pièce têtière (1), **caractérisée en ce que** le segment (10) terminal de la pièce têtière (1) qui reçoit la pièce de fond (8, 9) est configuré de telle sorte qu'il dépasse au moins localement la surface (80, 901) de la pièce de fond (8, 9) qui ne regarde pas le disque de commande (5) et que la pièce de fond (8, 9) ne dépasse ce segment (10) à aucun endroit, sachant que le siège de vanne présente une surface butée plane sur laquelle applique le segment terminal de la pièce têtière de sorte que les forces de serrage agissant à la verticale sont directement communiquées à la surface butée via la pièce têtière.

2. Robinetterie selon la revendication 1, **caractérisée en ce que** la pièce de fond (8) reçoit au moins un joint pour étanchéiser par rapport à un siège de vanne d'une robinetterie, joint qui dépasse le segment (10) terminal de la pièce têtière (1).

3. Robinetterie selon la revendication 2, **caractérisée en ce que** la surface enveloppante (90) de la pièce de fond (9) est formée localement par un segment d'un joint (941).

4. Robinetterie selon l'une des revendications précédentes, **caractérisée en ce que** le joint est formé par une pièce d'étanchéité moulée (7, 941) présentant au moins deux orifices de passage circulaires.

5. Robinetterie selon l'une des revendications 2 à 4, **caractérisée en ce que** la pièce de fond (8, 9) est configurée de telle sorte que le centre de la pièce de fond (8, 9) se trouve sur le plan de sa surface de fond (80, 901) et n'est pas formé par un joint.

6. Robinetterie selon l'une des revendications précédentes, **caractérisée en ce que** la cartouche de mitigeur est configurée comme vanne de sortie latérale.

7. Robinetterie selon l'une des revendications précédentes, **caractérisée en ce que** la pièce têtière (1) est configurée en pièce en laiton usinée au tour.
